# EUROPEAN PATENT APPLICATION

(11) **EP 2 626 975 A2**
(43) Date of publication of application: **14.08.2013**
(21) Application number: 12163286.3
(22) Date of filing: 05.04.2012
(51) Int. Cl.: H02K 1/27, H02K 15/03

(54) **Rotor assembly for motor and manufacturing method thereof**

(30) Priority: 10.02.2012 KR 20120013842
(71) Applicant: Samsung Electro-Mechanics Co., Ltd, Suwon Gyunggi-do 443-743 (KR)
(72) Inventor: Han, Moon Kyu, 443-743 Gyunggi-do (KR); Bae, Han Kyung, 443-743 Gyunggi-do (KR); Lee, Ki Young, 443-743 Gyunggi-do (KR)
(74) Representative: Heine, Christian Klaus

(57) **Abstract**

Disclosed herein are a rotor assembly for a motor in which separation type rotor cores having the other polarity are disposed between core members of integral type rotor cores having one polarity and the separation type rotor cores and the integral type rotor cores are fixed to each other using wedges or injection molding materials that are formed of a non-magnetic material, such that movement of magnetic fluxes between the integral type rotor cores and the separation type rotor core may be minimized, and a manufacturing method thereof.

## Description

### CROSS REFERENCE TO RELATED APPLICATION

This application claims the benefit of Korean Patent Application No. 10-2012-0013842, filed on February 10, 2012, entitled "Rotor Assembly for Motor and Manufacturing Method thereof", which is hereby incorporated by reference in its entirety into this application.

### BACKGROUND OF THE INVENTION

### 1. Technical Field

The present invention relates to a rotor assembly for a motor and a manufacturing method thereof.

### 2. Description of the Related Art

A motor generally includes a stator and a rotor, wherein the rotor is rotatably received in the stator. The motor rotates by repulsive force and attractive force generated according to a polarity of the rotor and a polarity of the stator.

The motor having this structure has become miniaturized and light, and a cost thereof has increased due to a rapid increase in a cost of a rare earth material. Therefore, as a new alternative, a rotor to which a magnet that does not include a rare earth material may be applied has been developed.

A rotor used in this motor is disclosed in Patent Document 1.

The rotor for a motor disclosed in Patent Document 1 is configured to include a rotor core in which a plurality of core plates are stacked, permanent magnets, core covers each disposed on an upper end surface and a lower end surface of the rotor core in an axial direction, and a connection pin part coupling two core covers disposed to have the rotor core therebetween to each other, as well-known.

Further, the rotor disclosed in Patent Document 1 includes the rotor core in which the plurality of core plates are stacked in the axial direction.

This rotor core includes a shaft hole receiving a shaft at the center thereof, a plurality of connection pin holes in parallel with the axial direction, and mounting slots uniformly disposed in a circumferential direction.

The stacked rotor core includes the respective rotor covers disposed at the upper end surface and the lower end surface thereof, wherein two rotor covers are connected to the connection pin holes of the rotor core by the connection pin parts.

The rotor according to the related art includes the mounting slots so that a plurality of permanent magnets may be mounted in parallel with an axial line direction of the shaft.

The mounting slots are perforated in the core plate so that the plurality of permanent magnets may be disposed in the circumferential direction as described above. A flat core plate is integrally formed, such that mechanical strength may be secured; however, magnetic leakage increases, such that magnetic force is weakened, thereby having a limitation in increasing a torque of the motor.

Another method capable of solving the problems as described above should be considered.

### [Prior Art Document]

### [Patent Document]

(Patent Document 1) Patent Document 1: Korean Utility Model Laid-Open Publication No. 20-1998-0062328

### SUMMARY OF THE INVENTION

The present invention has been made in an effort to provide a rotor assembly for a motor designed to maximize efficiency of the magnet use while providing a magnet concentrated disposition structure, and a manufacturing method thereof.

According to a preferred embodiment of the present invention, there is provided a rotor assembly for a motor, the rotor assembly including: a plurality of integral type rotor cores each including an annular part disposed at the center so as to receive a shaft therein and a plurality of core members spaced apart from each other by a predetermined interval, preferably, at equidistance, and extended radially in a circumferential direction of the annular part; a plurality of separation type rotor cores disposed between the plurality of core members and each having a slit formed in an inner peripheral surface thereof having an arc shape; wedges each including a base part and an extension part extended radially outwardly from the base part; and permanent magnets each disposed between one sides of the core members of the integral type rotor cores and one sides of the separation type rotor cores, wherein the wedges couple the plurality of integral type rotor cores to be stacked in an axial direction of the shaft and the plurality of separation type rotor cores to be stacked in the axial direction of the shaft to each other.

The number of separation type rotor cores may be the same as that of core members, and preferably, have 4 or more poles.

The core member may support the permanent magnet by protrusion parts adjacent to an outer peripheral surface thereof having an arc shape and protruded in the circumferential direction.

The integral type rotor core may further include catching jaws formed at both sides of the core member to support the permanent magnet.

The core member may further include a core hole formed at a center portion thereof.

The separation type rotor core and the core member of the integral type rotor core may substantially have a fan shape.

The extension part of the wedge may have a shape corresponding to that of the slit of the separation type rotor core.

The extension part of the wedge may have an omega (Ω) shape to prevent the separation type rotor core from being separated from the wedge.

The base part of the wedge may be bent at a curvature equal to that of the annular part of the integral type rotor core.

The separation type rotor core may include protrusion parts adjacent to an outer peripheral surface thereof having an arc shape and protruded in the circumferential direction.

The separation type rotor core may further include inner side protrusion parts adjacent to an inner peripheral surface thereof having an arc shape and protruded in the circumferential direction.

The permanent magnets may be disposed so that poles of two adjacent permanent magnets facing each other have the same polarity to provide different polarities to the integral type rotor core and the separation type rotor core.

The wedge may be formed of a non-magnetic material.

Unlike this, each of the integral type rotor core and the separation type rotor core may be formed of a magnetic material.

Selectively, the shaft may be formed of a magnetic material or a non-magnetic material.

According to another preferred embodiment of the present invention, there is provided a manufacturing method of a rotor assembly for a motor, the manufacturing method including: providing integral type rotor cores each having an annular part and plurality of core members spaced apart from each other by a predetermined interval in a circumferential direction of the annular part; providing separation type rotor cores each having a slit formed in an inner peripheral surface thereof having an arc shape; disposing the separation type rotor cores between the core members of the integral type rotor cores so as to be spaced apart from the integral type rotor cores by a predetermined interval; disposing permanent magnets in spaces between the integral type rotor cores and the separation type rotor cores; and fixing the integral type rotor cores and the separation type rotor cores to each other.

In the fixing of the integral type rotor cores and the separation type rotor cores to each other, wedges may be insertedly fixed to the annular parts of the integral type rotor cores and the slits of the separation type rotor cores.

The wedge may include a base part and an extension part extended outwardly from the base part.

In the fixing of the integral type rotor cores and the separation type rotor cores to each other, injection molding materials may be injected between the annular parts of the integral type rotor cores and inner peripheral surfaces of the separation type rotor cores by an injection molding process to fix the integral type rotor cores and the separation type rotor cores to each other.

The manufacturing method may further include press-fitting the rotor assembly into the shaft.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a side view showing a motor according to a preferred embodiment of the present invention;
FIG. 2 is a cross-sectional view taken along the line II-II in FIG. 1;
FIG. 3 is a view showing an integral type rotor core of a rotor assembly shown in FIG. 2;
FIG. 4 is a view showing a separation type rotor core of a rotor assembly shown in FIG. 2;
FIG. 5 is a view showing another example of a separation type rotor core;
FIG. 6 is a cross-sectional view of a wedge to be used in a rotor assembly;
FIG. 7 is a view showing a polarity of the rotor assembly shown in FIG. 2; and
FIG. 8 is a flow chart schematically showing a manufacturing method of a rotor assembly for a motor according to a preferred embodiment of the present invention.

### DESCRIPTION OF THE PREFERRED EMBODIMENTS

The objects, features and advantages of the present invention will be more clearly understood from the following detailed description of the preferred embodiments taken in conjunction with the accompanying drawings. Throughout the accompanying drawings, the same reference numerals are used to designate the same or similar components, and redundant descriptions thereof are omitted. Further, in the following description, the terms "first", "second", "one side", "the other side" and the like are used to differentiate a certain component from other components, but the configuration of such components should not be construed to be limited by the terms. Further, in the description of the present invention, when it is determined that the detailed description of the related art would obscure the gist of the present invention, the description thereof will be omitted.

Hereinafter, preferred embodiments of the present invention will be described in detail with reference to the attached drawings.

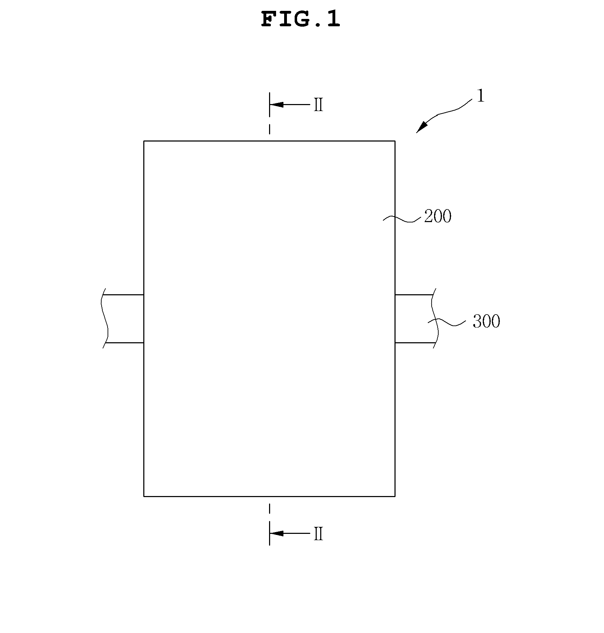

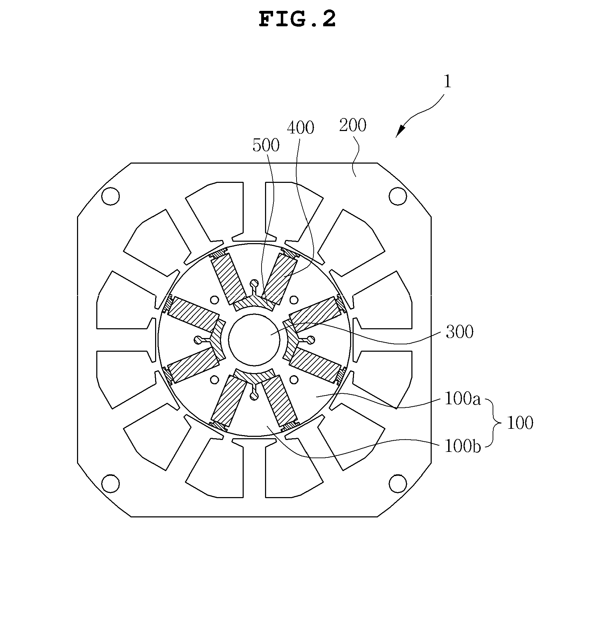

FIG. 1 is a side view showing a motor according to a preferred embodiment of the present invention; and FIG. 2 is a cross-sectional view taken along the line II-II in FIG. 1.

As shown, the motor according to the preferred embodiment of the present invention is configured to include a rotor assembly 100, a stator 200, a shaft 300, permanent magnets 400, and wedges 500.

As well-known to those skilled in the art, the rotor assembly 100 is coupled to the shaft 300 disposed at the center thereof, is rotatably received in the stator 200, and includes integral type rotor cores 100a and separation type rotor cores 100b stacked in an axial direction of the shaft 300. In addition, the rotor assembly 100 may be position-fixed by the wedge 500, having a predetermined interval between the integral type rotor core 100a and the separation type rotor core 100b.

The motor 1 according to the preferred embodiment of the present invention has a magnet concentrated disposition structure (spoke type) so as to increase a torque while maximizing efficiency of the magnet use in spite of using ferrite instead of a rare earth material that has been used in the prior art.

Preferably, in the motor 1 according to the preferred embodiment of the present invention, the permanent magnet 400 is disposed in a space formed between one side of the integral type rotor core 100a and one side of the separation type rotor core 100b adjacent to this integral type rotor core.

As described above, in the motor 1 according to the preferred embodiment of the present invention, the permanent magnets 400 are disposed in a spoke type in the rotor assembly 100, such that magnetization directions of the permanent magnets 400 are symmetrical to each other and magnetic fluxes of the permanent magnets 400 at both sides are overlapped with each other, thereby making it possible to have high magnetic flux density. Therefore, the motor 1 according to the preferred embodiment of the present invention generates a high torque.

The motor 1 according to the preferred embodiment of the present invention is designed in an 8-pole/12-slot structure. In other words, the motor 1 includes twelve stator cores protruded in a T shape from an inner peripheral surface of the stator 200, and the rotor assembly 100 includes eight permanent magnets disposed to be magnetized in the spoke type in a circumferential direction. This is an example of the motor according to the preferred embodiment of the present invention, and the present invention is not limited thereto. That is, the number of poles and the number of slots may be increased in order to increase an output of the motor.

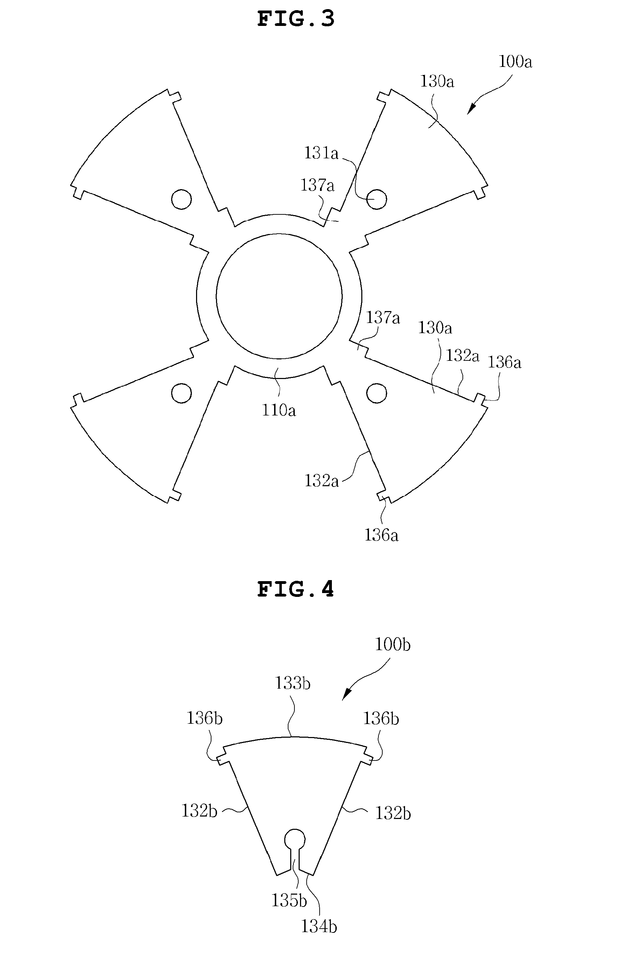

FIG. 3 is a view showing an integral type rotor core of a rotor assembly shown in FIG. 2.

The rotor assembly 100 according to the preferred embodiment of the present invention includes the integral type rotor core 100a and a plurality of separation type rotor cores 100b so that the permanent magnets 400 may be disposed in the spoke type (See FIG. 2).

More specifically, the integral type rotor core 100a includes an annular part 110a disposed at the center thereof and a core member 130a.

The annular part 110a may be disposed at the center of the integral type rotor core 100a and be fixed to an outer peripheral surface of the shaft 300 (See FIG. 2) by press-fitting, or the like. Preferably, an outer diameter of the shaft is substantially the same as an inner diameter of the annular part 110a, such that the annular part 110a may be certainly fixed to an outer peripheral surface of the shaft.

The core member 130a is extended from the annular part 110a in a radial direction, and particularly, has a flat fan shape.

The integral type rotor core 100a further includes protrusion parts 136a so that the permanent magnets to be magnetized on both sides 132a of the core member 130a may be fixed. This protrusion parts 136a are extended from both end portions of the outer peripheral surface of the core member 130a having a fan shape. In other words, the protrusion parts 136a are protruded on both sides 132a adjacent to the outer peripheral surface of the core member 130a having an arc shape.

The protrusion part 136a may prevent the permanent magnet from being separated to the outside due to centrifugal force generated at the time of rotation of the rotor assembly.

In order to certainly fix the permanent magnet at the time of the rotation of the rotor assembly, the permanent magnet may be seated on both sides 132a of the core member 130a by the protrusion part 136a and a catching jaw 137a of the core member 130a as described above. The catching jaw 137a is formed in a circumferential direction at an intersection portion between the core member 130a and the annular part 110a, more specifically, at both sides 132a of the core member 130a adjacent to the annular shape 110a.

The core members 130a are uniformly disposed at predetermined intervals, preferably, at equidistance, in the circumferential direction of the annular shape 110a. The integral type rotor core 100a shown in FIG. 3 includes four core members 130a, wherein each of the core members 130a is spaced apart from each other by a predetermined interval at an angle of 90 degrees along the outer peripheral surface of the annular part 110a.

The core member 130a includes a core hole 131a additionally formed in the center thereof. At the time of assembling, a plurality of integral type rotor cores 100a to be stacked in the axial direction may be integrated with each other by disposing the core holes 131a formed in each core member 130a in a row and then inserting a rod (not shown) into the core holes 131a.

As described above, the four core members 130a are spaced apart from each other at equidistance, and the rotor assembly 100 according to the preferred embodiment of the present invention includes separation type rotor cores 100b (See FIG. 4) disposed between the respective core members 130a as shown. That is, the number of separation type rotor cores needs to be the same as that of core members of the integral type rotor core.

The separation type rotor core will be described below with reference to FIG. 4.

FIG. 4 is a view showing a separation type rotor core of a rotor assembly shown in FIG. 2.

The separation type rotor cores 100b are stacked in the axial direction of the shaft 300 (See FIG. 2), similar to the integral type rotor cores 100a (See FIGS. 2 and 3), and is disposed so as not to contact directly the integral type rotor cores 100a.

As shown, the separation type rotor core 100b has a shape similar to that of the core member 130a (See FIG. 3) of the integral type rotor core. That is, the separation type rotor core 100b may generally have a fan shape which is formed by an outer peripheral surface 133b having an arc shape, an inner peripheral surface 134b having an arc, and sides 132b disposed between the outer peripheral surface 133b and the inner peripheral surface 134b and seating the permanent magnet.

In addition, a slit 135b is formed to be concave from the inner peripheral surface 134b toward a central portion the separation type rotor core 100b.

The slit 135b is disposed at the center of the inner peripheral surface 134b to allow the separation type rotor core 100b to be symmetrical to each other based on the slit 135b.

The separation type rotor core 100b further includes protrusion parts 136b so that permanent magnets to be magnetized on both sides 132b thereof may be certainly fixed. These protrusion parts 136b are extended from both end portions of the outer peripheral surface 133b by a predetermined length in the circumferential direction. In other words, the protrusion part 136b is protruded from both sides 132 adjacent to the outer peripheral surface 133b.

The protrusion part 136b may prevent the permanent magnet from being separated to the outside due to centrifugal force generated at the time of rotation of the rotor assembly.

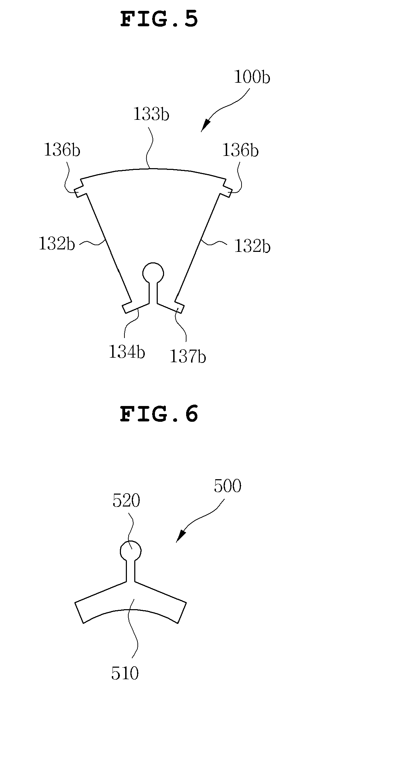

FIG. 5 is a view showing another example of a separation type rotor core. The separation type rotor core shown in FIG. 5 is similar to the separation type rotor core shown in FIG. 4 except for an inner side protrusion part. Therefore, in order to assist in clear understanding of the present invention, a description of components that are the same as or similar to the above-mentioned components will be omitted.

The separation type rotor core 100b includes protrusion parts 136b and inner side protrusion parts 137b formed on both sides 132a thereof so as to support the permanent magnets. The protrusion parts 136b are protruded from both sides 132b adjacent to the outer peripheral surface 133b in the circumferential direction. On the other hand, the inner side protrusion parts 137b are protruded from both sides 132b adjacent to the inner peripheral surface 134b in the circumferential direction.

Preferably, a spaced distance between the protrusion part 136b and the inner side protrusion part 137b is the same as a length of the permanent magnet to minimize a clearance between the permanent magnet and the separation type rotor core 100b, thereby making it possible to maximize durability and efficiency of the motor.

FIG. 6 is a cross-sectional view of a wedge to be used in a rotor assembly.

Referring to FIG. 2, the wedges 500 may allow the integral type rotor cores 100a and the separation type rotor cores 100b described above to be disposed at a regular position at a circumference of the shaft 300.

The wedge 500 may be formed of a non-magnetic material and shield movement of a magnetic flux between the integral type rotor core and the separation type rotor core.

The wedge 500 includes a base part 510 and an extension part 520, wherein the extension part 520 is extended outwardly from the center of the base part 510.

More specifically, the wedge 500 is disposed at the annular part 110a (See FIG. 3) of the integral type rotor core. In order to allow the wedge 500 to be seated on the outer peripheral surface of the annular part, the base part 510 of the wedge 500 is bent at a curvature equal to that of the annular part and has a width equal to a spaced distance between two adjacent catching jaws 137a (See FIG. 3) extended radially from the annular part. Therefore, the wedge 500 may be fitted into the integral type rotor core to thereby be certainly fixed in view of a position.

In addition, the extension part 520 has a shape corresponding to that of the slit 135b (See FIGS. 4 and 5) of the separation type rotor core, such that the extension part 520 may be fitted into the slit. Generally, since the separation type rotor cores 100b are stacked in the axial direction, the wedge 500 is formed of a T-shaped bar having a height equal to or slightly larger than that of the stacked separation type rotor cores 100b, such that the wedge 500 may be fitted in the axial direction.

Selectively, the wedge 500 is formed of an extension part 520 having an omega (Ω) shape. In this case, the extension part 520 has a changed width and thickness, thereby making it possible to prevent the separation type rotor core from being unexpectedly separated from the wedge 500 at the time of driving the motor in advance.

In addition, the base part 510 may also assist in supporting the permanent magnet to be magnetized on one side 132b of the separation type rotor core 100b shown in FIG. 4.

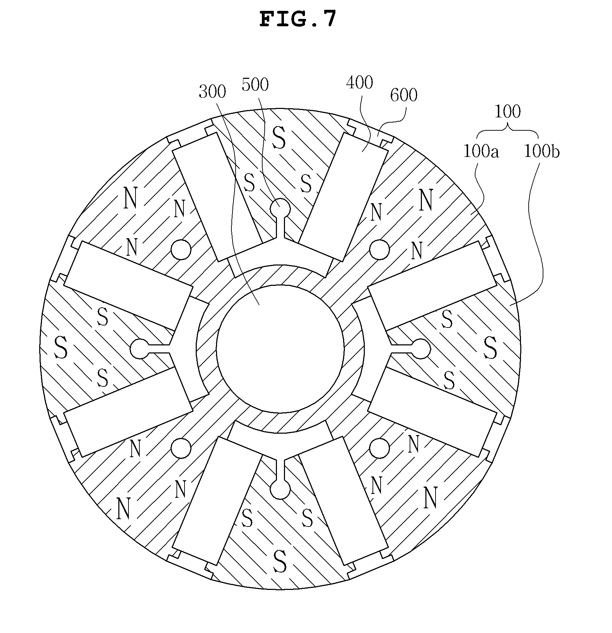

FIG. 7 is a view showing a polarity of the rotor assembly shown in FIG. 2.

Preferably, the integral type rotor core 100a and the separation type rotor core 100b are formed of a magnetic material such as a steel sheet. Particularly, the separation type rotor core 100b is certainly separated from the integral type rotor core 100a, having a predetermined interval therefrom.

That is, the permanent magnets 400 may be magnetized in spaces between each core member of the integral type rotor core 100a and the separation type rotor cores 100b. As shown, each of the permanent magnets is magnetized in eight spaces provided by four core members and four separation type rotor cores 100b.

Although the rotor assembly 100 for a motor according to the preferred embodiment of the present invention is designed to have eight poles through eight permanent magnets, the rotor assembly 100 may be applied to a motor having four or more poles in order to dispose the integral type rotor cores 100a and the separation type rotor cores 100b at equidistance.

As shown, eight permanent magnets 400 are disposed at equidistance in the circumferential direction based on the shaft 300. Preferably, poles of two adjacent permanent magnets facing each other among the permanent magnets 400 are disposed to have the same polarity. For example, in the rotor assembly 100, the integral type rotor cores 100a are formed to generally have an N polarity through magnetization of the permanent magnet 400. On the other hand, the respective separation type rotor cores 100b are formed to have an S polarity. Unlike this, the integral type rotor cores may also be formed to have an S polarity, and the separation type rotor cores may be formed to have an N polarity.

Particularly, the integral type rotor cores 100a have the same polarity (for example, an N polarity) according to disposition of the permanent magnet as described above. That is, since the integral type rotor cores has the same polarity, a magnetic flux does not internally move, such that leaked magnetic fluxes do not substantially occur.

In addition, the separation type rotor cores 100b have a polarity (for example, an S polarity) different from that of the integral type rotor cores according to the disposition of the permanent magnet as described above. Therefore, the separation type rotor cores 100b and the integral type rotor cores 100b are not in direct contact with each other, but are coupled to each other only by the wedge 500 formed of a non-magnetic material, thereby making it possible to prevent additional leaked magnetic fluxes between the integral type rotor cores 100a and the separation type rotor cores 100b in advance.

That is, since the integral type rotor cores 100a and the separation type rotor cores 100b configure different poles in a state in which the integral type rotor cores 100a and the separation type rotor cores 100b are separated from each other, the leaked magnetic fluxes between the poles do not occur, such that significantly high torque characteristics may be provided.

In addition, the rotor assembly 100 according to the preferred embodiment of the present invention may further include shielding members 600 each disposed on outermost sides of the permanent magnets 400 disposed in a spoke form. The shielding member 600 is formed to correspond to the protrusion parts of the integral type rotor core 100a and the protrusion part of the separation type rotor core 100b that are disposed to face each other and an disposition state of the side of the permanent magnet as shown. This shielding member 600 is formed of a non-magnetic material, thereby making it possible to minimize leaked magnetic fluxes to be generated at an outer portion of the rotor assembly 100.

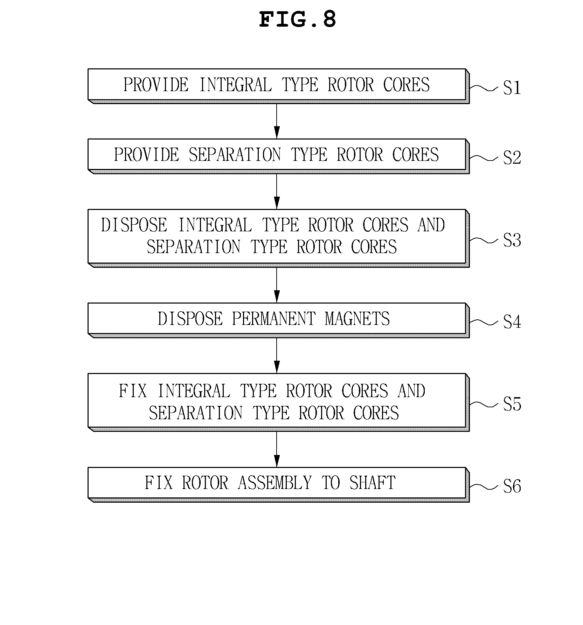

FIG. 8 is a flow chart schematically showing a manufacturing method of a rotor assembly for a motor according to a preferred embodiment of the present invention.

The rotor assembly for a motor according to the preferred embodiment of the present invention is manufactured by steps to be described below. However, a sequence of the steps may also be changed by a worker as needed.

Step 1 (S1) includes providing integral type rotor cores. Here, the integral type rotor core 100a is a flat plate including an annular part 110a receiving a shaft therein and core members 130a having a fan shape and formed of a magnetic material (See FIG. 3). The core members are uniformly extended at predetermined intervals, preferably, at equidistance, in a circumferential direction of the annular shape.

The integral type rotor cores are stacked in an axial direction of the shaft so as to be applied to the rotor assembly according to the preferred embodiment of the present invention.

Step 2 (S2) includes providing separation type rotor cores. Here, the separation type rotor core 100b is a flat plate having a fan shape similar to the core member of the integral type rotor core and formed of a magnetic material (See Fig. 4). This separation type rotor core includes a slit formed in an inner peripheral surface having an arc shape.

The separation type rotor cores are stacked in the axial direction of the shaft so as to be applied to the rotor assembly according to the preferred embodiment of the present invention.

Step 3 (S3) includes disposing the integral type rotor cores and the separation type rotor cores.

In this step, the stacked separation type rotor cores 100b are disposed in a state in which the stacked separation type rotor cores 100b are slightly spaced apart from the stacked integral type rotor cores 100a without directly contacting the stacked integral type rotor cores 100a. That is, the stacked separation type rotor cores 100b are disposed to be adjacent to the stacked separation type rotor cores 100b (See FIG. 7). More specifically, the stacked separation type rotor cores are disposed between the core members spaced apart from each other at equidistance in the stacked integral type rotor cores.

Preferably, the separation type rotor cores and the core members are disposed to be spaced apart from each other at the same intervals.

Step 4 (S4) includes disposing permanent magnets.

In step 3 (S3), each of the permanent magnets is inserted between the core members of the stacked integral type rotor core spaced apart from each other by a predetermined interval and the stacked separation type rotor cores. The permanent magnet may be disposed in a spoke form in order to increase magnetic flux density.

Referring to FIG. 7, the permanent magnets may be fixed without a clearance from the stacked integral type rotor core through the protrusion parts and the catching jaws formed at one sides of the core member. Additionally, the permanent magnet may be inserted between the protrusion part and the inner side protrusion part (or the wedge) formed on one side of the separation type rotor core to thereby be fixed without a clearance from the stacked separation type rotor core.

Step 5 (S5) includes fixing the integral type rotor cores and the separation type rotor cores to each other.

After the stacked respective separation type rotor cores are disposed between the core members of the stacked integral type rotor cores in step 3 (S3), the integral type rotor cores and the separation type rotor cores are coupled to each other in step 5 (S5).

To this end, in the rotor assembly for a motor according to the preferred embodiment of the present invention, after the separation type rotor cores are disposed between the core members of the integral type rotor cores, the wedge formed of a T-shaped bar is inserted in the axial direction of the shaft, thereby making it possible to fix the integral type rotor cores and the separation type rotor cores each other. The wedge is formed of a non-magnetic material to block movement of magnetic fluxes between the integral type rotor cores and the separation type rotor cores.

Selectively, in the rotor assembly for a motor according to the preferred embodiment of the present invention, the integral type rotor cores and the separation type rotor cores may be fixed to each other by an injection molding process instead of the wedge.

In detail, in the injection molding process, an injection molding material is injected between the annular part of the integral type rotor core and the inner peripheral surface of the separation type rotor core to integrate the permanent magnet as well as the integral type rotor core and the separation type rotor core, thereby making it possible to prevent movement of them. The injection molding material is also formed of a non-magnetic material.

Then, step 6 (S6) includes press-fitting the rotor assembly into the shaft. The rotor assembly completed as described above is rotatably installed in a stator of a motor.

Preferably, in the rotor assembly according to the preferred embodiment of the present invention, core holes are perforated at central portions of the core members so that the respective integral type rotor cores may be stacked while being matched to each other during a process of stacking the integral type rotor cores.

After a plurality of integral type rotor cores are stacked in the axial direction and the core holes are disposed in a row, a rod is inserted into the core holes, thereby making it possible to fix the integral type rotor cores.

As set forth above, according to the preferred embodiments of the present invention, the rotor assembly for a motor in which the integral type rotor cores and the separation type rotor cores are spaced apart from each other by a predetermined interval to minimize movement of magnetic fluxes may be provided.

According to the preferred embodiments of the present invention, the wedge and/or the injection molding material that are formed of a non-magnetic material is inserted and/or injected between the integral type rotor core having one polarity and the separation type rotor core having the other polarity to significantly reduce generation of leaked magnetic fluxes, thereby making it possible to improve output characteristics of the motor.

Further, according to the preferred embodiment of the present invention, the wedge and the permanent magnet are simply inserted or the injection molding material is injected to reduce the number of workers manufacturing the rotor assembly, thereby making it possible to reduce a cost.

Although the embodiments of the present invention have been disclosed for illustrative purposes, it will be appreciated that the present invention is not limited thereto, and those skilled in the art will appreciate that various modifications, additions and substitutions are possible, without departing from the scope and spirit of the invention.

Accordingly, any and all modifications, variations or equivalent arrangements should be considered to be within the scope of the invention, and the detailed scope of the invention will be disclosed by the accompanying claims.

## Claims

1. A rotor assembly for a motor, the rotor assembly comprising:
a plurality of integral type rotor cores each including an annular part disposed at the center so as to receive a shaft therein and a plurality of core members extended radially in a circumferential direction of the annular part;
a plurality of separation type rotor cores disposed between the plurality of core members and each having a slit formed in an inner peripheral surface thereof having an arc shape;
wedges each including a base part and an extension part extended radially outwardly from the base part; and
permanent magnets each disposed between one sides of the core members of the integral type rotor cores and one sides of the separation type rotor cores,
wherein the wedges couple the plurality of integral type rotor cores to be stacked in an axial direction of the shaft and the plurality of separation type rotor cores to be stacked in the axial direction of the shaft to each other.

2. The rotor assembly as set forth in claim 1, wherein the number of separation type rotor cores is the same as that of core members.

3. The rotor assembly as set forth in claim 1, wherein the core member includes protrusion parts protruded from sides adjacent to an outer peripheral surface thereof having an arc shape in the circumferential direction.

4. The rotor assembly as set forth in claim 1, wherein the core member further includes a core hole formed at a center portion thereof.

5. The rotor assembly as set forth in claim 1, wherein the core member further includes catching jaws formed at sides adjacent to the annular part.

6. The rotor assembly as set forth in claim 1, wherein the separation type rotor core and the core member substantially have a fan shape.

7. The rotor assembly as set forth in claim 1, wherein the extension part of the wedge has a shape corresponding to that of the slit of the separation type rotor core.

8. The rotor assembly as set forth in claim 1, wherein the extension part of the wedge has an omega (Ω) shape.

9. The rotor assembly as set forth in claim 1, wherein the base part of the wedge is bent at a curvature equal to that of the annular part of the integral type rotor core.

10. The rotor assembly as set forth in claim 1, wherein the separation type rotor core includes protrusion parts protruded from sides adjacent to an outer peripheral surface thereof having an arc shape in the circumferential direction.

11. The rotor assembly as set forth in claim 1, wherein the separation type rotor core further includes inner side protrusion parts protruded from sides adjacent to an inner peripheral surface thereof having an arc shape in the circumferential direction.

12. The rotor assembly as set forth in claim 1, wherein the permanent magnets are disposed so that poles of two adjacent permanent magnets facing each other have the same polarity.

13. The rotor assembly as set forth in claim 1, wherein the wedge is formed of a non-magnetic material.

14. The rotor assembly as set forth in claim 1, wherein each of the integral type rotor core and the separation type rotor core is formed of a magnetic material.

15. The rotor assembly as set forth in claim 1, wherein the plurality of separation type rotor cores are magnetized to have a polarity different from that of the integral type rotor cores.

16. The rotor assembly as set forth in claim 1, wherein the plurality of core members are spaced apart from each other at equidistance in the circumferential direction of the annular part.

17. A manufacturing method of a rotor assembly for a motor, the manufacturing method comprising:
providing integral type rotor cores each having an annular part and plurality of core members extended radially in a circumferential direction of the annular part;
providing separation type rotor cores each having a slit formed in an inner peripheral surface thereof;
disposing the separation type rotor cores between the core members of the integral type rotor cores so as to be spaced apart from the integral type rotor cores by a predetermined interval;
disposing permanent magnets in spaces between the integral type rotor cores and the separation type rotor cores; and
fixing the integral type rotor cores and the separation type rotor cores to each other.

18. The manufacturing method as set forth in claim 17, wherein in the fixing of the integral type rotor cores and the separation type rotor cores to each other, wedges are insertedly fixed to the annular parts of the integral type rotor cores and the slits of the separation type rotor cores.

19. The manufacturing method as set forth in claim 17, wherein the wedge includes a base part and an extension part extended outwardly from the base part.

20. The manufacturing method as set forth in claim 17, wherein in the fixing of the integral type rotor cores and the separation type rotor cores to each other, injection molding materials are injected between the annular parts of the integral type rotor cores and inner peripheral surfaces of the separation type rotor cores by an injection molding process to fix the integral type rotor cores and the separation type rotor cores to each other.

21. The manufacturing method as set forth in claim 17, further comprising press-fitting the rotor assembly into the shaft.
